Europäisches Patentamt

European Patent Office

Office européen des brevets

(19)

(11) Veröffentlichungsnummer : **0 168 065**
**B1**

(12)

# EUROPÄISCHE PATENTSCHRIFT

(45) Veröffentlichungstag der Patentschrift :
21.01.87

(21) Anmeldenummer : 85200321.9

(22) Anmeldetag : 06.03.85

(51) Int. Cl.⁴ : **C 08 L 61/10, C 08 J 3/28//**
**C08J5/14 ,(C08L61/10,**
**C08K5:49, 5:54, 5:55)**

(54) **Strahlungshärtendes Bindemittel und Verfahren zur Herstellung flächiger Gebilde.**

(30) Priorität : 18.05.84 DE 3418477

(43) Veröffentlichungstag der Anmeldung :
15.01.86 Patentblatt 86/03

(45) Bekanntmachung des Hinweises auf die Patenterteilung : 21.01.87 Patentblatt 87/04

(84) Benannte Vertragsstaaten :
BE CH DE FR IT LI LU NL

(56) Entgegenhaltungen :
DE-A- 3 317 570
GB-A- 1 329 888

(73) Patentinhaber : **Rütgerswerke Aktiengesellschaft**
**Mainzer Landstrasse 217**
**D-6000 Frankfurt a.Main 1 (DE)**

(72) Erfinder : **Jellinek, Karl, Dr.**
**Mörikeweg 1**
**D-5860 Iserlohn (DE)**
Erfinder : **Gardziella, Arno, Dr.**
**Rüdinghauser Berg 4**
**D-5810 Witten (DE)**
Erfinder : **Adolphs, Peter, Dr.**
**Sellerblick 19**
**D-5860 Iserlohn (DE)**

EP 0 168 065 B1

## Beschreibung

Strahlungshärtendes Bindemittel und Verfahren zur Herstellung flächiger Gebilde

Die Erfindung betrifft strahlungshärtende Bindemittel auf Basis von Phenolresolen sowie ein Verfahren zur Herstellung von flächigen Gebilden durch Strahlungshärtung dieser Bindemittel.

Flächige Gebilde sind flache Formteile, die aus Bindemitteln und Füll- und Zusatzstoffen hergestellt sind. Beispiele für derartige Gebilde sind Schleifmittel auf Unterlage, Schleifscheiben, Trennscheiben, aber auch Feuerfeststoffe oder Kohlenstoffwerkstoffe mit Schichtstärken bis zu 10 mm. Die bevorzugten Bindemittel für derartige Gebilde sind Phenolharze oder Phenolharz-Härter-Kombinationen, die durch thermische Behandlung gehärtet werden. Aus Gründen der Energie- und auch Zeitersparnis wird angestrebt, unter Erhaltung der vollen Lagerstabilität der Bindemittelsysteme die thermische Behandlung zu reduzieren oder gar ganz zu umgehen. Eine Möglichkeit hierzu bietet die Strahlungshärtung.

Phenolharz-Systeme, die durch Strahlung gehärtet werden, sind aus der Drucktechnik bekannt. Bei dieser Anwendung hat man einerseits sehr dünne Schichten mit gleichmäßiger Schichtdicke und andererseits eine ebene, gut ausleuchtbare Oberfläche. Außerdem wird dabei nur das ungefüllte Harz gehärtet. All dies wurde für eine Strahlungshärtung der Phenolharze für notwendig erachtet, da die Härtung über einen Ionenmechanismus und nicht radikalisch verläuft.

Eine Schleifmittelzusammensetzung, die ein säurehärtbares Phenolresol und als Härtungskatalysator eine durch Lichteinwirkung freisetzbare organische Sulfonsäure enthält, ist aus DE-33 17-570 Al bekannt. Die Schleifmittelzusammensetzung wird nach dem Trocknen mit Licht bestrahlt und danach durch Wärmeeinwirkung gehärtet. Dieses Verfahren hat den Nachteil, daß doch noch eine, wenn auch stark reduzierte thermische Härtung der Bindemittel notwendig ist. Darüber hinaus sind auch die gemäß diesem Verfahren gehärteten Bindemittelschichten relativ dünn.

Es bestand daher die Aufgabe, lagerstabile, strahlungshärtende Bindemittel auf Basis von Phenolharz bereitzustellen, die in einem Verfahren zur Herstellung flächiger Gebilde eingesetzt werden können und die zur Aushärtung auch bei Schichtdicken bis zu 10 mm lediglich einer Bestrahlung bedürfen.

Die Lösung der Aufgabe erfolgt durch ein Bindemittel gemäß Anspruch 1 sowie ein Verfahren gemäß Anspruch 2.

Es wurde gefunden, daß Bindemittel aus einem Phenol-Resol und 0,5 bis 5 Gew.- % Aryl- oder Arylalkyl-Oniumsalz einer komplexen Fluorsäure, die bei dunkler Lagerung lagerstabil sind, beim Bestrahlen mit Elektronen-, Röntgen- oder Gammastrahlung innerhalb weniger Minuten in Schichtdicken bis zu 10 mm gehärtet werden können. Diese Härtung erfolgt auch, wenn Füllstoff- oder schleifkornhaltige Massen, die die erfindungsgemäßen Bindemittel enthalten, mit ausreichender Intensität bestrahlt werden. Dabei ist für die Härtung eine Temperatur unter 50 °C ausreichend, wobei eine Temperaturerhöhung zu einer erhöhten Produktivität führt. Bevorzugt erfolgt die Bestrahlung bei Raumtemperatur bzw. in einer betriebswarmen Apparatur, die das zu härtende Flächengebilde mit einer Geschwindigkeit von bis zu 10 m/min durchläuft. Da jedoch der Härtungsprozeß auf einer Kondensationsreaktion beruht, muß das gebildete Wasser aus der gehärteten Masse entfernt werden. Dies erfolgt durch kurzzeitiges Erwärmen des gehärteten Produkts im Vakuum auf eine Temperatur von ca. 50 bis 80 °C.

Phenol-Resole sind Kondensationsprodukte aus der alkalisch katalysierten Kondensation von Aldehyden mit Phenol, Resorcin, Kresol oder Xylenol. Besonders bevorzugt sind schwach alkalische bis neutrale oder neutral eingestellte Phenol- Formaldehyd-Resole, die zusätzlich noch mit Furan- oder Epoxidharzen modifiziert sein können.

Die erfindungsgemäßen Härtungskatalysatoren sind Aryl- oder Arylalkyl-Oniumsalze (z. B. Diazonium-, Jodonium-, Phosphonium- und Sulfoniumsalze) einer komplexen Fluorsäure, wie z. B. der Hexafluorphosphor-, Tetrafluorbor- oder der Hexafluorkieselsäure.

Die Härtungskatalysatoren werden in einer Menge von 0,5 bis 5 Gew.- % (bezogen auf das wasserfreie Harz) mit dem Phenol-Resol oder seiner wäßrigen Lösung sowie mit Schleifkorn oder Füllstoffen vermischt und getrocknet und bilden bei gegen Strahlung abgeschirmter Lagerung ein nahezu beliebig lange lagerbares Gemisch.

Als Strahlung dient Elektronenstrahlung oder energiereiche Strahlung wie Röntgen- oder Gammastrahlung.

Die Bestrahlungszeiten sind abhängig von der Strahlungsintensität und der -energie. Je kurzwelliger die Strahlung, umso schneller wird die Durchhärtung erreicht und umso dickere Harzschichten werden innerhalb weniger Minuten gehärtet.

Beispiel

Natronkraftpapier (zur Herstellung von Schleifpapier) mit einem Flächengewicht von 220 g/m² wird über Walzenauftrag mit einem Gemisch aus 100 Teilen eines wäßrigen (Harzgehalt 75 %) handelsüblichen säurehärtbaren, mit einem Phenol-Formaldehyd-Verhältnis von 1 : 2, mit Natronlauge kondensierten Phenolresols, 5 Teilen einer 50 %igen wäßrigen Lösung von Naphthyldiazoniumhexafluorsilikat (hergestellt aus dem Umsetzungsprodukt aus Naphthylamin und Natriumnitrit in salzsaurer Lösung und Kopplung des erhaltenen Chlorides mit Kaliumhexafluorsilikat) und 25 Teilen Kryolith in einer Menge von ca. 80 g/m² Fläche einseitig beschichtet. Die Schichtdicke beträgt ca. 180 µm.

Danach erfolgt der elektrostatische Auftrag von Edelkorund der Körnung 800. Das so behandelte Papier durchläuft eine Strahlungskammer eines Elektronenbeschleunigers mit angelegter Spannung von 300 keV mit einer Durchlaufzeit von 30 sec. Das so vorgehärtete Material wird mit einem Gemisch aus 100 Teilen des beschriebenen Phenolresols, 5 Teilen des beschriebenen Härters und 50 Teilen Kryolith über Walzenauftrag mit einer Auftragsmenge von 400 g/m² und einer Schichtdicke von ca. 800 µm beleimt.

Das so vorbehandelte nicht gehärtete Schleifpapier durchläuft die Strahlungskammer mit einer Gesamtaufenthaltsdauer von 2 min bei einer angelegten Spannung von 400 keV. Oberflächenwasser wird danach durch Durchlaufen einer Vakuumkammer bei einer Temperatur von 60 °C und einem angelegten Vakuum von ca. 100 mbar entfernt. Danach wird das fertige Schleifmaterial geflext und konfektioniert. Die Schleifleistung entspricht konventionell hergestellter handelsüblicher Ware.

**Patentansprüche**

1. Strahlungshärtendes Bindemittel auf Basis eines Phenolresols, dadurch gekennzeichnet, daß es 0,5-5 Gew. %, bezogen auf das Resol, eines Aryl- oder Arylalkyl-Oniumsalzes einer komplexen Fluorsäure enthält.

2. Verfahren zur Herstellung von flächigen Gebilden, dadurch gekennzeichnet, daß eine ein Bindemittel aus Phenolresol und 0,5-5 Gew. % eines Aryl- oder Arylalkyl-Oniumsalzes einer komplexen Fluorsäure enthaltende Schicht durch Bestrahlen mit Elektronen-, Röntgen- oder Gammastrahlen gehärtet wird.

**Claims**

1. Radiation curable binder system based on a phenolic resol resin, characterized in that it contains 0.5 to 5 weight percent, based on the resol, of an aryl or aryl-alkyl-onium salt of a complex fluoric acid.

2. A process for the preparation of flat objects characterized in that a layer containing a binder system based on a phenolic resol resin and 0.5 to 5 weight percent of an aryl- or aryl-alkyl-onium salt of a complex fluoric acid is cured by radiation with electron beam, X-rays or gamma rays.

**Revendications**

1. Liant durcissant par irradiation à base d'un phénolrésol, caractérisé en ce qu'il contient 0,5-5 % en poids rapporté au résol, d'un sel d'onium d'aryle ou arylcoyle d'un acide complexe de fluore.

2. Procédé pour la préparation de produits plats, caractérisé en ce qu'une couche contenant un liant de phénolrésol et 0,5-5 % en poids d'un sel d'onium d'aryle ou d'arylalcoyle d'un acide complexe de fluore est durci par irradiation aux rayons électroniques, X ou gamma.